# EUROPÄISCHE PATENTANMELDUNG

(11) **EP 2 180 569 A2**
(43) Veröffentlichungstag der Anmeldung: **28.04.2010**
(21) Anmeldenummer: 09169477.8
(22) Anmeldetag: 04.09.2009
(51) Int. Cl.: H02H 3/33, H02H 3/20

(54) **Verfahren zum Schutz vor Überspannung in einem an ein Stromversorgungsnetz angeschlossenen System, Überspannungsschutzgerät und Anordnung mit einem solchen**

(30) Priorität: 23.10.2008 DE 102008052949
(71) Anmelder: Siemens Aktiengesellschaft, 80333 München (DE)
(72) Erfinder: Huber, Hans-Jürgen, 93047, Regensburg (DE); Kleemeier, Manfred, 93073, Neutraubling (DE); Strahl, Armin, 93189, Reichenbach (DE)

(57) **Zusammenfassung**

Ein Überspannungsschutzgerät (32) erfasst, ob in einem Stromversorgungsnetz, an die über einen Fehlerstromschutzschalter (10) ein anderes System angeschlossen ist, eine Überspannung herrscht. Damit Schaltglieder (16, 22) des Fehlerstromschutzschalters (10) bei einer solchen Überspannung das angeschlossene System abkoppeln, erzeugt das Überspannungsschutzgerät (32) ein elektrisches oder magnetisches Feld, das unmittelbar auf ein Auslöseelement (26) einwirkt. So kann durch eine Magnetspule (44) in dem Überspannungsschutzgerät (32) ein Magnetfeld erzeugt werden, das einen Haltemagneten (26) bewegt, der dadurch ein Schaltschloss (24) für die Schaltglieder (16) und (22) auslöst.

## Beschreibung

Die Erfindung betrifft ein Verfahren zum Schutz vor vorbestimmten Bedingungen in einem an ein Stromversorgungsnetz angeschlossenes System. Es geht hierbei hauptsächlich darum, dass das an das Stromversorgungsnetz angeschlossene System bei Überspannung im Stromversorgungsnetz von selbigem entkoppelt wird. Das an das Stromversorgungsnetz angeschlossene System kann ein kleines Nebennetz sein und umfasst zumindest einige Leitungen, wobei an diesen Leitungen im Regelfall Verbraucher angeschlossen sind. Im Bereich der Ankopplung des Systems an das Stromversorgungsnetz ist typischerweise ein Schutzschalter vorgesehen. Ein klassisches Beispiel für einen solchen Schutzschalter ist ein Fehlerstromschutzschalter. Ein Schutzschalter bewirkt bei vorbestimmten Bedingungen eine elektrische Trennung zwischen dem Stromversorgungsnetz und dem angeschlossenen System. In dem Schutzschalter sind Schaltglieder vorgesehen. Auf die Schaltglieder wirkt ein Schaltschloss ein, um sie zu öffnen. Das Schaltschloss seinerseits wird durch ein Auslöseelement aktiviert, also zum Auslösen gebracht. Bei einem Fehlerstromschutzschalter ist das Auslöseelement typischerweise ein Haltemagnet mit einem Stößel, der durch das Fließen eines Stromes dazu gebracht wird, sich zu bewegen, z. B. sich mit dem Stößel auf eine Klinke des Schaltschlosses zu bewegen. Auf den Haltemagneten wirkt hierbei ein Magnetfeld, das durch den fließenden Strom erzeugt wird. Bei einem Fehlerstromschutzschalter entsteht dieser Strom auf der Sekundärseite eines Summenstromwandlers.

Es ist nun bekannt, die Schaltglieder eines Fehlerstromschutzschalters dazu zu nutzen, auch bei einer Überspannung das an das Stromversorgungsnetz angeschlossene System von ersterem elektrisch zu trennen. Hierzu wird die Spannung gemessen, also an Leitungen abgegriffen. Es kann an zwei Leitungsabschnitten auf der Systemseite des Schutzschalters, aber genauso gut an um zwei Leitungsabschnitten auf der Stromversorgungsnetzseite des Schutzschalters abgegriffen werden. Da diese Leitungsabschnitte über den Schutzschalter miteinander in elektrischem Kontakt stehen, wird bei beiden Alternativen jeweils dieselbe Spannung gemessen. Die Spannung wird nun durch ein Auswertegerät analysiert, und zwar hinsichtlich des Erfüllseins eines vorbestimmten Kriteriums. Klassischerweise umfasst dieses, dass die abgegriffene Spannung einen Schwellwert überschreitet. Zusätzlich kann das vorbestimmte Kriterium umfassen, dass dieses Überschreiten für eine vorbestimmte Zeitdauer geschieht, es können Integrale berechnet werden, z. B. über die Differenz der gemessenen Spannung zu dem Schwellwert etc.

Im Stand der Technik bewirkt nun das Auswertegerät ein Öffnen der Schaltglieder dadurch, dass ein künstlicher Fehlerstrom erzeugt wird, dessen Fließen bewirkt, dass der Fehlerstromschutzschalter gemäß seiner Funktionalität arbeitet.

Im Stand der Technik gibt es zwei Möglichkeiten, wie ein künstlicher Fehlerstrom erzeugt werden kann:

Bei der ersten Alternative weist das Auswertegerät einen Erdungsanschluss auf und lässt einen Strom von einer der Leitungen, an denen es die Spannung abgreift, zu dem Erdungsanschluss fließen. Nachteilig ist hierbei, dass der Erdungsanschluss unter Spannung gesetzt wird, was insbesondere im Fehlerfall zu einer Gefährdung von Personen führen kann.

Ein Überspannungsschutzgerät, das gemäß der ersten Möglichkeit arbeitet, wird von der Firma PHOENIX CONTACT GmbH & Co. KG unter dem Namen VAL-CP-TOV vertrieben.

Bei einer zweiten Alternative wird eine erste Leitung auf der Stromversorgungsnetzseite mit einer zweiten Leitung auf der Systemseite des Schutzschalters gekoppelt, es fließt somit ein Strom von der ersten Leitung zur zweiten Leitung am Fehlerstromschutzschalter vorbei, der dann einen Fehlerstrom detektiert und auslöst. Der Fehlerstromschutzschalter stellt im Bereich seiner sich öffnenden Schaltglieder eine Trennstrecke bereit, die eine ausreichende galvanische Trennung zwischen Zuleitung vom Stromversorgungsnetz und Ableitung zum an diesem angeschlossenen System bewirkt. Wird nun künstlich ein Fehlerstrom von einer ersten Zuleitung zu einer zweiten Ableitung erzeugt, so ist eine galvanische Trennung nicht mehr gegeben, und auch dies kann zu einer Gefährdung von Geräten und Personen führen.

Es ist Aufgabe der Erfindung, ein Verfahren zum Schutz vor vorbestimmten Bedingungen, insbesondere vor Überspannung, in einem an ein Stromversorgungsnetz angeschlossenen System bereitzustellen, das nicht die Nachteile der bisher angewendeten Verfahren aufweist. Aufgabe ist es gleichzeitig, ein das erfindungsgemäße Verfahren ermöglichendes Überspannungsschutzgerät bereitzustellen.

Die Aufgabe wird durch ein Verfahren mit den Merkmalen gemäß Patentanspruch 1 gelöst. Zur Lösung der Aufgabe gehört das Bereitstellen eines Überspannungsschutzgeräts mit den Merkmalen gemäß Patentanspruch 3. Es ist gemäß einem Aspekt der Lösung der Aufgabe in einer Anordnung mit den Merkmalen gemäß Patentanspruch 5 einzusetzen.

Das erfindungsgemäße Verfahren umfasst den Schritt, dass bei Erfüllsein des vorbestimmten Kriteriums, das durch den Analyseschritt des Verfahrens festgestellt wird, der Schritt des Erzeugens eines elektrischen oder magnetischen Feldes durch das Auswertegerät durchgeführt wird, wobei das erzeugte Feld unmittelbar auf das Auslöseelement des Schutzschalters derart einwirkt, dass das Auslöseelement das Schaltschloss auslöst (entklinkt) und so das zumindest eine Schaltglied des Schutzschalters geöffnet wird.

Die Erfindung beruht auf der Erkenntnis, dass das Auslöseelement grundsätzlich durch ein elektrisches oder magnetisches Feld zum Auslösen bringbar ist. Anstatt wie bisher den Umweg zu wählen, einen Fehlerstrom zu erzeugen und einen Fehlerstromschutzschalter aufgrund seines inneren Mechanismus das elektrische oder magnetische Feld erzeugen zu lassen, erzeugt das Auswertegerät ein auf das Auslöseelement wirkendes elektrisches oder magnetisches Feld selbst. Es muss dann kein künstlicher Fehlerstrom erzeugt werden. Das Auswertegerät gibt insbesondere gar keinen Strom nach außen ab, sondern eben lediglich das elektrische oder magnetische Feld.

Das Überspannungsschutzgerät gemäß der Erfindung weist zumindest zwei Eingangsanschlüsse auf, sowie Mittel zum Auswerten einer an zwei Eingangsanschlüssen anliegenden Spannung. Es ist **dadurch gekennzeichnet, dass** es Mittel zum unmittelbaren Erzeugen eines elektrischen oder magnetischen Felds außerhalb von sich selbst in Abhängigkeit vom Ergebnis eines Auswertens durch die Mittel zum Auswerten aufweist.

Im Regelfall wird nicht ein elektrisches, sondern ein magnetisches Feld erzeugt, so dass bei einer bevorzugten Ausführungsform des erfindungsgemäßen Überspannungsschutzgeräts die Mittel zum Erzeugen eine Magnetspule umfassen sowie auch Mittel umfassen, um diese Magnetspule mit Strom zu beaufschlagen. Die durch einen über die Magnetspule fließenden Strom bereitgestellte Lorentzkraft kann dann auf ein Auslöseelement eines Schutzschalters einwirken, der sich in ausreichender Nähe zum Überspannungsschutzgerät befindet bzw. dessen Auslöseelement sich in ausreichender Nähe zur Magnetspule befindet.

Bei der erfindungsgemäßen Anordnung aus einem Schutzschalter und einem Überspannungsschutzgerät der erfindungsgemäßen Art weist der Schutzschalter in an sich bekannter Weise zumindest zwei Anschlusspaare auf. An beiden Anschlüssen eines Paares sind Leitungsabschnitte (die zur Anordnung gehören mögen) angeschlossen. Ein Anschlusspaar ist **dadurch gekennzeichnet, dass** die beiden an ihnen angeschlossenen Leitungsabschnitte gemeinsam eine Leitung bilden, indem sie von dem Schutzschalter in einem Grundzustand überbrückt werden. Der Grundzustand ist **dadurch gekennzeichnet, dass** ein Schaltglied geschlossen ist. In einem Auslösezustand sind die Schaltglieder geöffnet. Somit ist die Leitung unterbrechbar. Das Öffnen der Schaltglieder erfolgt durch Auslösen (Entklinken) eines Schaltschlosses durch ein Auslöseelement im Schutzschalter.

Zumindest zwei Eingangsanschlüsse des Überspannungsschutzgeräts sind jeweils mit einem Leitungsabschnitt verbunden, wobei die Leitungsabschnitte verschiedenen Leitungen im Grundzustand zugehörig sind. Nun sind die Mittel zum Erzeugen eines elektrischen oder magnetischen Feldes des Überspannungsschutzgeräts so räumlich passend zu dem Schutzschalter angeordnet, dass ein von Ihnen erzeugtes Feld auf das Auslöseelement derart einwirkt, dass das Schaltschloss ausgelöst wird und jedes Schaltglied geöffnet wird.

Bevorzugt ist der Schutzschalter ein Fehlerstromschutzschalter. Insbesondere bei Fehlerstromschutzschaltern umfasst das Auslöseelement einen Haltemagneten. In vorteilhafter Weise kann passend hierzu die mit Strom beaufschlagbare Magnetspule im Überspannungsschutzgerät bereitgestellt sein. Die Anordnung der Magnetspule im Überspannungsschutzgerät soll dann passend zur Anordnung des Haltemagneten so gewählt sein, dass durch das Magnetfeld, welches ein durch die Magnetspule fließender Strom erzeugt, der Haltemagnet in Bewegung gesetzt wird.

Im Regelfall wird man zu jeder Art von Fehlerstromschutzschalter ein passendes Überspannungsschutzgerät konstruieren können, um eine erfindungsgemäße Anordnung erzeugen zu können. Die geeignete Platzierung der Magnetspule im Verhältnis zum Haltemagneten ergibt sich bei der Montage des Fehlerstromschutzschalters und des Überspannungsschutzgeräts von selbst, wenn beide wie üblich gemeinsam auf einer Hutschiene montiert werden.

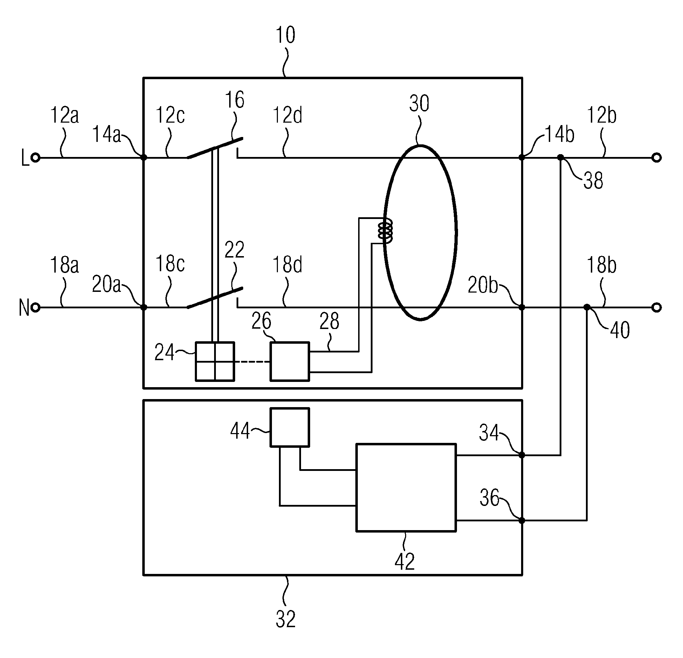

Nachfolgend wird eine bevorzugte Ausführungsform der Erfindung unter Bezug auf die Zeichnung beschrieben, in der
- FIG 1: schematisch eine erfindungsgemäße Anordnung zur Durchführung des erfindungsgemäßen Verfahrens mit einem erfindungsgemäßen Überspannungsschutzgerät zeigt.

Über einen Fehlerstromschutzschalter 10 ist an ein Stromversorgungsnetz ein kleines Netz wie beispielsweise das einer Produktionsstätte oder eines Haushaltes angeschlossen. Anhand von FIG 1 ist dies ein einphasiges System mit einem Phasenleiter L und einem Nullleiter N gezeigt, die Erfindung ist jedoch auch auf ein mehrphasiges, insbesondere ein dreiphasiges System anwendbar.

Der Fehlerstromschutzschalter 10 überbrückt einen Leitungsabschnitt 12a, der zum Stromversorgungsnetz gelöst oder zu diesem führt, mit einem Leitungsabschnitt 12b, der zu dem anzuschließenden System gehört oder zu diesem führt. Hierzu sind Anschlüsse 14a und 14b des Fehlerstromschutzschalters 10 intern miteinander verbunden bzw. verbindbar, und zwar über einen Leitungsabschnitt 12c und einen Leitungsabschnitt 12d, die durch ein Schaltglied 16 voneinander getrennt sind. Das Schaltglied 16 ist in einem Grundzustand geschlossen, so dass die Folge aus Leitungsabschnitt 12a, Leitungsabschnitt 12c, Schaltglied 16, Leitungsabschnitt 12d und Leitungsabschnitt 12b insgesamt eine durchgängige Leitung bildet. Analog hierzu gibt es Leitungsabschnitte 18a und 18b, die an Anschlüssen 20a bzw.20b des Fehlerstromschutzschalters 10 angeschlossen sind und über Leitungsabschnitte 18c, 18d miteinander koppelbar sind, wobei ein Schaltglied 22 bereitgestellt ist.

Die Schaltglieder 16 und 22 können in an sich bekannter Weise durch ein Schaltschloss 24 geöffnet werden. Damit das Schaltschloss 24 dies tut, muss ein Auslöseelement 26 auf dies einwirken. Das Auslöseelement 26 umfasst einen Haltemagneten, der durch einen über eine Leitung 28 auf der Sekundärseite eines Summenstromwandlers 30 fließenden Strom bewegt wird, weil der Strom ein Magnetfeld erzeugt, das den Haltemagneten anzieht. Der Summenstromwandler 30 dient zum Detektieren eines Fehlerstroms. In an sich bekannter Weise wird ein Strom, der den Haltemagneten bewegt, genau dann erzeugt, wenn in dem an das Stromversorgungsnetz angeschlossenen System ein Fehlerstrom fließt.

Vorliegend soll das an das Stromversorgungsnetz angeschlossene System auch vor Überspannungen geschützt sein. Hierzu ist ein Überspannungsschutzgerät 32 bereitgestellt. Dieses weist Eingangsanschlüsse 34 und 36 auf, die mit Anschlüssen 38 bzw. 40 an den Leitungsabschnitten 12b bzw. 18b verbunden sind, so dass die im Netz herrschende Spannung zwischen den Eingangsanschlüssen 34 und 36 anliegt. Diese Spannung wird durch eine Auswerteeinheit 42 ausgewertet, die sowohl als elektronische Schaltung als auch als Mikroprozessor ausgebildet sein kann. Überschreitet die Spannung einen vorher festgelegten oder von außen am Überspannungsschutzgerät 32 einstellbaren Schwellwert, so soll das System vom Stromversorgungsnetz abgekoppelt werden, insbesondere kurzfristig. Dies soll durch Öffnen der Schaltglieder 16 und 22 geschehen. Der Schwellwert liegt z. B. bei 10% über dem Nominalwert, bei einer Sollnetzspannung von 230 V also bei 253 V. Ist der Schwellwert überschritten, bewirkt die Auswerteeinheit 42, dass über eine Magnetspule 44 ein Strom mit ausreichender Stärke gesandt wird, dass ein Magnetfeld erzeugt wird, welches den Haltemagneten des Auslöseelements 26 bewegt, und zwar auf das Schaltschloss 24 zu. Das Überspannungsschutzgerät 32 ist passend zu dem Fehlerstromschutzschalter 10 so gebaut, dass die Magnetspule 44 bei Montage des Überspannungsschutzgeräts 32 zusammen mit dem Fehlerstromschutzschalter 10 und benachbart zu diesem auf einer Hutschiene genau benachbart zu dem Auslöseelement 26 liegt, so dass das von der Magnetspule 44 erzeugte Magnetfeld in den Fehlerstromschutzschalter 10 einkoppelt, und zwar genau den Haltemagneten bewegt.

Bei der Erfindung muss nicht der namensgebende Mechanismus des Fehlerstromschutzschalters 10 ausgenutzt werden, damit dieser selbst das den Haltemagneten bewegende Magnetfeld erzeugt. Das Überspannungsschutzgerät 32 arbeitet viel einfacher und hat daher in seinem Betrieb geringere Nebeneffekte als Überspannungsschutzgerät gemäß dem Stand der Technik.

### Bezugszeichenliste

- 10: Fehlerstromschutzschalter
- 12a, 12b, 12c, 12d;: Leitungsabschnitte
- 18a, 18b, 18c, 18d 14a, 14b; 20a, 20b: Anschlüsse des Fehlerstromschutzschalters 10
- 16, 22: Schaltglieder
- 24: Schaltschloss
- 26: Auslöseelement
- 28: Leitung
- 30: Summenstromwandler
- 32: Überspannungsschutzgerät
- 34, 36: Eingangsanschlüsse
- 38, 40: Anschlüsse
- 42: Auswerteeinheit
- 44: Magnetspule
- L: Phasenleiter
- N: Nullleiter

## Patentansprüche

1. Verfahren zum Schutz vor vorbestimmten Bedingungen in einem an ein Stromversorgungsnetz angeschlossenen System, wobei das System über einen Schutzschalter (10), insbesondere einen Fehlerstromschutzschalter (10), mit dem Stromversorgungsnetz gekoppelt ist, wobei durch den Schutzschalter (10) eine elektrische Trennung erfolgen kann, indem ein Auslöseelement (26) in dem Schutzschalter (10) ein Schaltschloss (24) auslöst, das zumindest ein Schaltglied (16, 22) öffnet, mit den Schritten:
- Abgreifen einer Spannung an zwei Leitungen (12b, 18b),
- Analysieren der Spannung durch ein Auswertegerät (32) hinsichtlich des Erfüllseins eines vorbestimmten Kriteriums,
**gekennzeichnet** bei Erfüllsein des vorbestimmten Kriteriums durch den Schritt
- Erzeugen eines elektrischen oder magnetischen Feldes durch das Auswertegerät (32), so dass das Feld unmittelbar auf das Auslöseelement (26) derart einwirkt, dass das Auslöseelement (26) das Schaltschloss (24) auslöst und das zumindest eine Schaltglied (16, 22) geöffnet wird.

2. Verfahren nach Anspruch 1, bei dem das vorbestimmte Kriterium umfasst, dass die abgegriffene Spannung einen Schwellwert überschreitet.

3. Überspannungsschutzgerät (32) mit zumindest zwei Eingangsanschlüssen (34, 36) und mit Mitteln (42) zum Auswerten einer an zwei Eingangsschlüssen (34, 36) anliegenden Spannung, **gekennzeichnet durch** Mittel (44) zum unmittelbaren Erzeugen eines elektrischen oder magnetischen Feldes außerhalb des Überspannungsschutzgeräts (32) in Abhängigkeit vom Ergebnis eines Auswertens **durch** die Mittel (42) zum Auswerten.

4. Überspannungsschutzgerät nach Anspruch 3, **dadurch gekennzeichnet, dass** die Mittel zum Erzeugen eine Magnetspule (44) sowie Mittel, um diese mit Strom zu beaufschlagen, umfassen.

5. Anordnung mit einem Schutzschalter (10) und mit einem Überspannungsschutzgerät (32) nach Anspruch 3 oder 4, bei der der Schutzschalter zumindest zwei Anschlusspaare (14a, 14b; 20a, 20b) aufweist, wobei an beiden Anschlüssen (14a, 14b; 20a, 20b) eines Paares Leitungsabschnitte (12a, 12b; 18a, 18b) angeschlossen sind und diese zur Bildung einer Leitung von dem Schutzschalter in einem Grundzustand überbrückt werden, wobei im Grundzustand ein Schaltglied (16, 22) geschlossen ist und die Leitung unterbrechbar ist, indem die Schaltglieder (16, 22) aufgrund eines Auslösens eines Schaltschlosses (24) durch ein Auslöseelement (26) geöffnet werden,
wobei zumindest zwei Eingangsanschlüsse (34, 36) des Überspannungsschutzgeräts (32) mit einem Leitungsabschnitt (12b, 18b) zu einer jeweils anderen Leitung verbunden sind, und wobei die Mittel (44) zum Erzeugen eines Feldes des Überspannungsschutzgeräts (32) so räumlich passend zu dem Schutzschalter (10) angeordnet sind, dass ein von ihnen erzeugtes Feld auf das Auslöseelement (26) derart einwirkt, dass das Schaltschloss (24) ausgelöst wird und jedes Schaltglied (16, 22) geöffnet wird.

6. Anordnung nach Anspruch 5 mit einem Überspannungsschutzgerät (32) nach Anspruch 4, bei der das Auslöseelement (26) einen Haltemagneten umfasst, welcher durch das Magnetfeld, das ein durch die Magnetspule (44) fließender Strom erzeugt, in Bewegung setzbar ist.
